# EUROPEAN PATENT APPLICATION

(11) **EP 3 156 222 A1**
(43) Date of publication of application: **19.04.2017**
(21) Application number: 15190122.0
(22) Date of filing: 16.10.2015
(51) Int. Cl.: B32B 9/04, B32B 7/00, B32B 7/10, B32B 7/12, B32B 9/00, B32B 27/00, B32B 27/06, B32B 27/08, B32B 27/18, B32B 27/22, B32B 27/28, B32B 27/30, B32B 27/36, B32B 3/00, B32B 3/06, B32B 3/16, B32B 3/30

(54) **DECORATIVE MULTI-LAYER SURFACE COVERING COMPRISING POLYVINYL BUTYRAL**

(71) Applicant: Tarkett GDL, 9779 Lentzweiler (LU)
(72) Inventor: PAILLER, Frédéric, 9559 Wiltz (LU); BASTIN, Pierre, 9559 Wiltz (LU); STIERNET, Jean-Luc, 9559 Wiltz (LU)
(74) Representative: Pronovem

(57) **Abstract**

The present invention is related to decorative multi-layer surface coverings comprising a backing layer, wherein said backing layer comprises a polymer blend, said polymer blend comprising polyvinyl butyral and polylactic acid.

## Description

### Field of the Invention

The present invention is related to decorative multi-layer surface coverings comprising a backing layer, said backing layer comprising polyvinyl butyral, polylactic acid and acrylate comprising polymer(s).
The invention is further related to a method for the production of said surface coverings.

### State of the Art

Synthetic flooring has gained widespread commercial acceptance and is made from various flooring compositions which may comprise all sorts of resins or mixtures of resins.

Flooring materials have to fulfil several technical criteria such as, for example, abrasion and scuff resistance, stain resistance, a good balance between hardness and flexibility, compatibility with additional adjuvants such as, for example, plasticizers, fillers, UV-stabilizers, pigments and colouring agents, flame retardants and antistatic agents, the possibility of its easily industrially processing, and an economically attractive raw materials cost.

While floorings such as tiles are frequently made as a mono-layer, multi-layer executions compositions exhibiting different in-use properties, can also be used.

A typical multi-layer flooring can contain, for example, seen from the bottom to the top, a core layer, a coloured and/or printed interface layer, a transparent wear layer and possibly an extra top-wear layer of polyurethane or poly(meth)acrylates. This flooring can optionally be combined with a form stabilizing element such as, for example a glass fiber mat and a backing layer.

A major component of many current synthetic flooring compositions is polyvinyl chloride (PVC) which can be applied in various forms such as, e.g. plasticized PVC and PVC foam. As a matter of fact, PVC is virtually the sole polymer which is widely used in flooring materials.

For environmental and other reasons, there is an on-going effort to develop adequate resin compositions for flooring with a substantially reduced chlorine content.

The ecological concerns related to the PVC decorative covering segment pertain to recyclability or energy recovery, volatile organic content levels, and the use of heavy metal stabilizers.

The hydrogen chloride and heavy metal ash from decomposition of the heavy metal stabilizers are undesired consequences from the incineration of scrap associated with manufacturing and installation of PVC-based covering materials.

Consequently, even though PVC offers an excellent mechanical, acoustic and heat insulation compromise in its application to floor coverings, the manufacturers of these coverings have been looking for a substitute for it, providing an answer to the following three points of concern:
- releasing no toxic gas when burnt, such as chlorine, hydrochloric acid, sulfur dioxide or nitrogen oxides;
- having properties, especially mechanical properties and fire resistance, of the same order as those obtained today with PVC;
- being capable of processing or fabrication on existing equipment, especially by extrusion, calendering, and the like.

In recent years, PVC-free floor and wall coverings materials have become popular and already have been subject of a considerable number of patents such as for example EP 0257796 (B1), EP 0742098 (B1), EP 0850272 (B1), EP1611201 (B1), US 4,379,190, US 4,403,007, US 4,438,228, US 5,409,986, US 6,214,924, US 6,187,424, US 2011/0305886, JP 2004168860, JP 2002276141, JPH 07125145, JPH 06128402, JP 2000063732, JPH 1148416, JP 2000045187, JPH 0932258, JPS 6092342 and JPH 09302903.

In light of the growing environmental awareness, it is advantageous to replace petrochemical plastics to a maximum and to have recycled "difficult biodegradable" polymers, such as polyvinyl butyral (PVB) and/or ecologically friendly "green" materials , such as polylactic acid (PLA) as raw material(s) for flooring applications providing the flooring with desirable physical and mechanical properties.

PLA (polylactic acid) has been one of the most commercially successful bioplastics and its introduction into floor and wall coverings already is subject to a number of patents.

US 2005/0136259 relates to polylactide-based products and more particularly to durable tile or sheet form floor coverings made of one or more layers of polymers suitable for e.g. pedestrian traffic in domestic and/or other situations over an extended period of time.

US 2010/0015420 relates to a biolaminate composite assembly, including one or more biolaminate layers, a non-plastic rigid substrate and an adhesive layer in contact with the substrate and the one or more biolaminate layers. Biolaminate refers to one or more thin layers including materials that are derived from natural or biological components such as polylactic acid in combination with optional additives, colorants, fillers, reinforcements, minerals, and other inputs.

US 2013/004751 discloses a flooring material using polylactic acid resin comprising a base layer, a print layer which is formed on top of the base layer, and has a print pattern on an upper side thereof and a transparent layer which is formed on top of the print layer, wherein one or more of the base layer, the print layer, and the transparent layer include polylactic acid resin.

EP 1361039 B1 discloses polymeric materials and products prepared from the polymeric materials including a polylactic acid-based polymer in combination with plasticizer and a compatibilizer, and optionally include a filler. The polymeric material can include between about 30 to about 50 percent by weight polyvinyl chloride, polyethylene glycol, polyglycolide, ethylene vinyl acetate, polycarbonate, polycaprolactone, polyhydroxyalkanoates and polyolefins modified with polar groups such as an ionomer. The plasticizer is typically an epoxidized vegetable oil or esterified and epoxidized vegetable oil and is typically present in an amount of between about 10 and about 50% by weight. The compatibilizer comprising a polyolefin modified with one or more polar functional groups, is typically present in an amount of between about 5 and about 10% by weight. The material can be used in decorative surface coverings, such as a floor coverings, particularly when it is in the form of a polymeric sheet.

WO 2007/089451 and WO 2009/045564 relate to a blend of one or more biodegradable polymers with one or more acrylic copolymers, in an amount of from 0.1 to 15% by weight, for the purpose of improving good metal release properties as well as other improved properties, such as melt strength, of said one or more biodegradable polymer(s). One problem, for instance with polylactide is its poor melt strength leading to difficulties in subsequent melt processing.

WO 92/04412 relates to films of blends of polyhydroxy acid polymer, such as polylactic acid, and other compatible thermoplastic polymers characterized as having a sufficient number and distribution of hydrophilic groups, such as copolyetheresters, ethylene vinyl alcohol comprising copolymers and polyolefins, and their production by melt processing.

Polyvinyl butyral (PVB) sheet is widely used as a clear, transparent, shock-absorbing interlayer in laminated safety glazings for motor vehicle, aircraft, architectural, security and like applications.

The glass from these safety glasses can be recovered by conventional techniques such as grinding, crushing, and milling the scrap glass to recover the glass cullet to the glass manufacturer, while the PVB is disposed of in landfills or incinerators.

Considering the abundant amount of post-consumer PVB available, appropriate recycling possibilities such as its use in the production of shaped articles, such as surface coverings, already have been examined.

EP 1084188 B1 discloses a composition comprising a) 5 to 95 parts by weight of polyvinyl chloride and b) 95 to 5 parts by weight of either virgin or recycled/recovered polyvinyl butyral per 100 parts by weight of said polyvinyl chloride and said polyvinyl butyral combined; and c) 1 to 50 parts by weight of a high-molecular weight solid ethylene-containing plasticizer per 100 parts by weight of said polyvinyl chloride, said polyvinyl butyral and said ethylene-containing plasticizer combined.

US 2,552,600 discloses floor and wall coverings composed of a flexible, alkali-resistant decorative wear layer including a binder comprising plasticized polyvinyl butyral and a heat convertible phenolic resin.

EP 0471658 B1 discloses a flooring composition comprising plasticized polyvinyl butyral resin recovered from laminated safety glass, containing minute glass particles in an amount up to 10 % by weight, in a resin mixture comprising 95 to 25 % by weight of recovered plasticized PVB and 5 to 75% by weight of another compatible resin including homopolymers and copolymers such as for example polyvinyl butyral, polyvinyl chloride, polyvinyl acetate, polyethylvinyl acetate, polyvinyl formal, nitrile butadiene rubber and the like.

EP 0419438 B1 discloses a sheet formed of a polyblend comprising, on a weight basis, a) 30 to 90% polyvinyl butyral containing about 11 to 30% hydroxyl groups and b) 70 to 10% thermoplastic polyurethane.

EP 0853097 discloses a polymer composition, suitable for resilient flooring, comprising polyvinyl butyral and a polymer which contains a polar moiety which is effective to form a hydrogen bond with the polyvinyl butyral, wherein the polymer having the polar moiety is present at an amount in the range of from about 3 to about 25% by weight based on the weight of the polyvinyl butyral and the polymer having the polar moiety combined, wherein further the composition is sufficiently non-sticking that it can be extruded and calendered without substantial adherence to hot metal parts. The polymer having the polar moiety is selected from the group consisting of polyethylene methacrylic acid, the partial metal salt of polyethylene methacrylic acid, polyethylene acrylic acid, polyethylene vinyl acetate, polyamide, polyamine, a thermoplastic polyurethane, polyvinyl alcohol, polyethylene carbon monoxide and mixtures thereof.

Substituting PVC by "green" and/or recycled alternatives in general necessitates to accept compromises regarding to the technical performances of the derived decorative surface coverings.

Polylactid acid, for example, suffers from hydrolytic instability, an insufficient alcohol- and stain resistance and furthermore is characterized by a too low melt-viscosity for trouble-free calendering.

Polyvinyl butyral suffers from insufficient alcohol resistance and an adequate rigidity. Moreover, recycled polyvinyl butyral in general comprises a significant amount of plasticizer what limits its adherence to non-glass surfaces as is the case in multi-layer decorative surface coverings and generally results in a deterioration of certain desirable laminate properties.

Furthermore compositions comprising polyvinyl butyral tend to stick to hot metal parts and either cause problems in processing such as cacking and build-up of polymer on the metal, or are so prone to sticking to metal that such materials cannot be processed at all.

### Aims of the invention.

The present invention aims to provide decorative floor and wall coverings, comprising biobased and/or recycled polymers, that do not present the drawbacks of the state of the art decorative surface coverings comprising green and/or recycled polymers.

The present invention aims to provide a multi-layer decorative surface covering, prepared by means of a conventional process, comprising a backing layer said backing layer comprising recycled and/or biobased polymers and being characterized by an outstanding adherence to the layer contacting it, while showing an excellent compatibility with the adhesives intended for sticking the multi-layer surface covering to a substrate such as wall, ceiling or floor.

Moreover, the present invention aims providing a multi-layer decorative surface covering comprising a backing layer comprising biobased plasticizers.

The present invention further aims to provide said multi-layer decorative surface coverings using conventional processing equipment and processing conditions, said surface coverings answering technical criteria similar to the existing PVC alternatives.

### Summary of the invention.

The present invention discloses a decorative multi-layer surface covering comprising a backing layer, said backing layer comprising a polymer blend, said polymer blend comprising:
- from 30 to 90% by weight, preferably from 35 to 80% by weight, more preferably from 40 to 75% by weight of polylactic acid(ii) or of a mixture of polylactic acid and one or more (meth) acrylate comprising polymers (iii), wherein said mixture comprises at least 5% by weight of polylactic acid.
- from 10% to 70% by weight, preferably from 20 to 65%, more preferably 25 to 60% by weight of polyvinyl butyral(i) or of a mixture of polyvinyl butyral and one or more vinyl alkanoate comprising polymer(s) (iv), wherein said mixture comprises at least 5% by weight of polyvinyl butyral,
the total amount of polymer in the polymer blend representing 100% by weight.

Preferred embodiments of the present invention disclose one or more of the following features:
- the polyvinyl butyral is recycled polyvinyl butyral;
- the polyvinyl butyral is recycled polyvinyl butyral comprising from about 5 to about 50% by weight, of one or more plasticizers selected from the group consisting of alkyl esters of polyethylene glycol, dialkyl esters of aliphatic dicarboxylic acid, alkyl-aryl of aliphatic dicarboxylic acids, alkyl esters of aromatic mono-, di-, tri-, or tetra-carboxylic acids, alkyl-aryl esters of aromatic di-, tri-, or tetra-carboxylic acids, phosphate esters and ricinoleates;
- the one or more (meth)acrylate comprising polymers (iii) are selected from the group of:
   - (iii.a) the alkyl (meth)acrylate homo- or a random (co)polymer comprising at least 60% by weight, preferably at least 70% by weight, more preferably at least 80 parts by weight of methyl (meth)acrylate;
   - (iii.b) the alkyl (meth)acrylate copolymer is a block copolymer comprising one or more blocks of methacrylic ester units and one or more blocks of acrylic ester units;
   - (iii.c) the alkene/alkyl (meth)acrylate copolymer comprising from 50 to 95% by weight of one or more alkenes and from 5 to 50% by weight of one or more C₁-C₈ alkyl (meth)acrylates;
   - (iii.d) the alkene/ alkyl (meth)acrylate/carbon monoxide copolymer comprising from 40 to 80% by weight of one or more alkenes, from 5 to 60% by weight of one or more alkyl (meth)acrylates and from 3 to 30% by weight of carbon monoxide; and
   - mixtures of (iii.a), (iii.b), (iii.c) and (iii.d);
- the one or more vinyl alkanoate comprising polymer(s) (iv) are selected from the group consisting of:
   - (iv.a) the vinyl alkanoate polymer comprising at least 60% by weight, more preferably at least 70% by weight, most preferably at least 80% by weight or even at least 90% by weight of vinyl acetate.
   - (iv.b) the alkene/vinyl alkanoate copolymer comprising 60% by weight or more, preferably 70% or more, more preferably 80% or more, most preferably 85% or more of vinyl alkanoate;
   - (iv.c) the alkene/vinyl alkanoate/carbon monoxide copolymer comprising 40 to 80% by weight of one or more alkenes, 5 to 60% by weight of one or more vinyl alkanoates and 3 to 30% by weight of carbon monoxide; and
   - mixtures of (iv.a), (iv.b) and (iv.c);
- the backing layer comprises from 2 to 100 parts by weight, preferably from 3 to 70 parts by weight, more preferably from 4 to 55 parts by weight and most preferably from 5 to 40 part by weight of one or more plasticizers selected from the group consisting of dialkyl esters of cyclohexane dicarboxylic acids; dialkyl esters of aliphatic dicarboxylic acids; alkyl esters of aromatic mono- di-, tri-, or tetra-carboxylic acids; lower alkyl phosphates; lower alkyl-aryl phosphates; alkyl sulfonates and bioplasticizers for 100 parts by weight of the polymer blend;
- the backing layer comprises one or more bioplasticizers selected from the group consisting of acetylated monoglycerides, C₁-C₈ alkyl citrate, C₁-C₈ alkyl acetylcitrate and epoxidized vegetable oils;
- the backing layer is PVC-free;
- the decorative surface covering comprises:
   - the backing layer in contact with the bottom surface of the core layer,
   - a printed layer in contact with the top surface of the core layer,
   - a wear layer in contact with the top surface of the printed layer,
   wherein at least one of said core-, printed- and wear layer comprises polylactic acid and/or polyvinyl butyral and/or (meth)acrylate comprising polymer(s) and/or vinyl alkanoate comprising polymer(s);
- at least one of the core layer, the printed layer and the wear layer is PVC-free.
- the decorative multi-layer surface covering comprises an adhesive on the bottom-surface of the backing layer;
- the decorative multi-layer surface covering, under the form of tiles, comprises at least one groove on at least one side, preferably on at least two sides located opposite to each other.

The present invention further discloses a method for the preparation of the decorative multi-layer surface coverings comprising the steps of:
a) melt-mixing the backing layer constituents at a temperature comprised between 140 and 240°C to form a backing-paste ;
b) converting the backing-paste of step a) into the backing-layer using a calendering process at a temperature comprised between 100 and 200°C;
c) contacting and affixing the top-surface of the backing layer of step b) with one or more pastes, wherein at least one of said pastes comprises polylactic acid and/or polyvinyl butyral, said contacting and affixing being performed through a calendering process, at a temperature comprised between 130 and 220°C, to form a decorative multi-layer stack.

Preferred embodiments of the method for the preparation of said multi-layer decorative surface covering disclose one or more of the following features:
- the polyvinyl butyral is at least partly obtained from a recycling process;
- the method comprises the additional step of providing tiles and providing at least one groove on at least one side, preferably on at least two sides being located opposite to each other, of said tiles;
- the method comprises the additional step of applying an adhesive composition on the bottom-surface of the backing layer and converting the adhesive composition to form the adhesive layer;
- the adhesive composition is selected from the group consisting of aqueous adhesives and organic solvent-free adhesives;
- the adhesive layer is obtained from:
   - evaporating water from the aqueous adhesive composition; or
   - thermal activated conversion of an adhesive precursor; or
   - radiation induced conversion of an adhesive precursor.

### Detailed description of the invention.

The present invention provides a decorative multi-layer surface covering comprising a backing layer, a core layer formed on top of the backing layer, a printed layer formed on top of the core layer and a transparent wear layer formed on top of the printed layer, wherein the backing layer comprises a polymer blend comprising polyvinyl butyral and polylactic acid and optionally one or more (meth) acrylate comprising polymer(s) and/or one or more vinyl alkanoate comprising polymer(s) and wherein at least one of the core layer, the printed layer and the wear layer comprises PLA and/or PVB and/or one or more (meth)acrylate comprising polymer(s) and/or one or more vinyl alkanoate comprising polymer(s).

The inventors have surprisingly found that a backing layer comprising a polymer blend combining PLA and/or one or more (meth) acrylate comprising polymer(s) and/or one or more vinyl alkanoate comprising polymer(s), is characterized by a melt strength well adapted to conventional processing used for flooring industry, especially adapted to the extrusion and calendaring processes. Moreover a backing layer comprising said polymer blend proves an outstanding inter-layer adherence with the core layer, said core layer comprising PVB, and an excellent compatibility with conventional adhesives intended for sticking the decorative surface covering to a substrate.

The polymer blend of the backing layer comprising PLA and/or (meth)acrylate comprising polymer(s) and/or vinyl alkanoate comprising polymer(s), can further reduce dynamic viscosity. The reduced dynamic viscosity is of particular interest for said polymer blend comprising PVB, since it implies reduced PVB degradation risks during conventional process conditions.

Preferably the backing layer is polyvinyl chloride free.

Preferably at least one of the core layer, the printed layer and the wear layer is polyvinyl chloride free; more preferably the decorative multi-layer surface covering is polyvinyl chloride free.

Polyvinyl butyral (i) (PVB) for being used in the composition of the present invention, may be virgin polyvinyl butyral, that is PVB which has not been used previously, but preferably is recovered or recycled, providing a lower cost but an equally high quality raw material. The kind of recovered or recycled PVB is not critical. It has been found that recovered or recycled PVB of different kinds and from different manufacturing origins, as well as mixtures of different kinds of PVB, are suitable for use in accordance to this invention. The recovered or recycled PVB can contain common additives and contaminants such as plasticizers, sand, and fine glass particles while still being acceptable for use in the decorative substrates of the present invention.

PVB is a complex resin which may be manufactured, depending upon the desired application, with large variations in respect to structural features and composition.

Polyvinyl acetals, in general, are prepared from aldehydes and polyvinyl alcohols.

Polyvinyl alcohols are high molecular weight resins containing various percentages of hydroxyl and acetate groups, produced by hydrolysis of polyvinyl acetate. The conditions of the acetal reaction and the concentration of the particular aldehyde and polyvinyl alcohol used are closely controlled to form polymers containing predetermined proportions of hydroxyl groups, acetate groups and acetal groups.

PVB resin is produced by known aqueous or solvent acetalization processes wherein polyvinyl alcohol is reacted with butyraldehyde in the presence of an acid catalyst to produce PVB, followed by neutralization of the catalyst, separation, stabilization and drying of the PVB resin.

A method for recycling of PVB is disclosed in for example US 2005/0146074, US 2009/0209667 and US 2010/0249254.

The primary differences between different types of PVB relate to differences in molecular weight, differences in the content of hydroxyl, butyral and residual ester groups, and differences in the type and content of other additives.

A typical PVB, for being used in the polymer blend of the present invention, has a molecular weight range, according to the Staudinger equation, of from 30,000 to 600,000, preferably of from 50,000 to 400,000; a range of from 10% to 30% by weight, preferably of from 12% to 25% by weight of hydroxyl groups calculated as the polyvinyl alcohol, and a range of from 0% to 5% by weight, preferably of from 0% to 3% by weight of residual ester groups calculated as polyvinyl acetate.

Preferably, the PVB for being used in the decorative surfaces of the present invention comprises recycled PVB; more preferably the PVB for being used in the decorative surfaces of the present invention is recycled PVB.

In general recycled PVB is plasticized. The contents of the plasticizers in PVB may vary largely, for example from about 5 to about 50% by weight, in general from about 20 to about 30% by weight.

Typical plasticizers present in recycled PVB are alkyl esters of polyethylene glycol such as diethylene glycol di-2-ethylbutyrate, diethylene glycol di-n-hexoate, triethylene glycol di-2,ethylbutyrate, triethylene glycol di-n-hexoate, triethylene glycol di-2-methyl pentoate, triethylene glycol di-2-ethylhexanoate, triethylene glycol di-heptanoate, tetraethylene glycol di-2-ethylbutyrate, tetraethylene glycol di-heptanoate, tetraethylene glycol di-2-ethylhexanoate, pentaethylene glycol di-2-ethylbutyrate, dialkyl esters of aliphatic dicarboxylic acid such as dibutyl adipate, di-n-pentyl adipate, di-n-hexyl adipate, di-n-heptyl adipate and di-n-octyl adipate, di-n-butyl sebacate, mixed alkylaryl adipates such as benzyl decyl adipate, benzyl octyl adipate, benzyl hexyl adipate and benzyl butyl adipate, alkyl-aryl esters of aromatic di-, tri-, or tetra-carboxylic acids such as butyl benzyl phthalate (BBP), alkyl esters of aromatic mono-, di-, tri-, or tetra-carboxylic acids such di-iso octyl phthalate, phosphate esters such as2-ethylhexyl diphenyl phosphate and ricinoleates such as butyl ricinoleate.

Polylactic acid (ii) (PLA) for being used in the composition of the present invention, refers to a thermoplastic polyester derived from 2-hydroxy lactate (lactic acid) or lactide (cyclic diester). The formula of the subunit is: -[O-CH(CH₃)-CO]-

The alpha-carbon of the monomer (CH₃CH(OH)CO₂H) is optically active, said monomer being produced by a fermentation method using a sugar extracted from maize, potatoes, or the like. Polylactic acid is typically selected from the group consisting of D-polylactic acid, L-polylactic acid, D,L-polylactic acid, meso-polylactic acid, and any combination thereof.

PLA in general is classified into crystalline PLA and amorphous PLA. The amorphous character increases as the racemic content increases.

A typical PLA (ii), for being used in the polymer blend of the backing layer of the present invention, is an amorphous resin, possibly comprising some crystallinity, and characterized by a number average molecular weight comprised between 15,000 and 300,000, preferably between 50,000 and 250,000.

(Meth)acrylate comprising polymers (iii) for being used in the polymer blend of the backing layer of the present invention are selected from the group consisting of alkyl(meth)acrylate homo- and random copolymers (iii.a); alkyl(meth)acrylate block copolymers (iii.b); alkene/ alkyl(meth)acrylate copolymers (iii.c); alkene/ alkyl(meth)acrylate/ carbon monoxide copolymers (iii.d); and mixtures thereof.

The alkyl(meth)acrylate (co)polymers (iii.a) comprise homopolymers of methyl methacrylate and/or random copolymers of methyl methacrylate and C₁ to C₈ alkyl (meth)acrylate, said C₁ to C₈ alkyl (meth)acrylates being selected from the group consisting of methyl (meth)acrylate, ethyl (meth)acrylate, n-propyl (meth)acrylate, n-butyl (meth)acrylate, i-butyl (meth)acrylate, n-hexyl (meth)acrylate, and 2-ethylhexyl (meth)acrylate; said copolymers containing at least 60% by weight, preferably at least 70% by weight, more preferably at least 80 parts by weight of methyl methacrylate.

Poly(methyl methacrylate) (PMMA) is preferably used.

The alkyl (meth)acrylate block copolymers (iii.b) comprise from 10 to 90% by weight, preferably from 20 to 80% by weight of one or more block(s) comprising alkyl methacrylate monomers and from 90 to 10% by weight, preferably from 80 to 20% by weight of one or more blocks comprising alkyl acrylate monomers.

Preferably the glass transition temperature (measured by Differential Scanning Calorimetry, according to ASTM D3418 with a heating gradient of 20°C per minute) of the alkyl methacrylate comprising blocks is comprised between 70 and 110°C, more preferably between 80 and 110°C and most preferably between 90 and 110 °C. The glass transition temperature of the alkyl acrylate comprising blocks is comprised between -70 and -20°C, preferably between -60 and -30°C and more preferably between -50 and -40°C.

Preferably the alkyl (meth)acrylate block copolymer is a di-block copolymer comprising a block comprising alkyl acrylate monomers and a block comprising alkyl methacrylate monomers such as for example a di-block copolymer comprising a block comprising n-butyl acrylate monomers and a block comprising methyl methacrylate monomers.

The alkyl (meth)acrylate copolymer more preferably is a tri-block copolymer comprising one block comprising alkyl acrylate monomers and two blocks comprising alkyl methacrylate monomers such as for example a tri-block copolymer comprising one block comprising n-butyl acrylate monomers and two blocks comprising methyl methacrylate monomers.

The alkene/ alkyl(meth)acrylate copolymers (iii.c) comprise from 50 to 95% by weight of one or more alkenes and from 5 to 50% by weight of one or more C₁-C₈ alkyl (meth)acrylates wherein the one or more alkenes are defined by the general formula R₁R₂C=CR₃R₄, wherein R₁, R₂, R₃ and R₄ independently is a hydrogen or an alkyl radical containing from 1 to 4 carbon atoms and are preferably selected from the group consisting of ethene, propene, 1-butene, 1-pentene, 1-hexene, 2-methyl-1-butene, 2,3-dimethyl-1-pentene; and wherein the C₁-C₈ alkyl (meth)acrylates are selected from the group as defined in the alkyl(meth)acrylate (co)polymers (iii.a).

Preferably the alkene/alkyl(meth)acrylate copolymer is an ethylene/methyl acrylate or an ethylene/butyl acrylate copolymer.

The alkene/ alkyl(meth)acrylate/ carbon monoxide copolymers (iii.d) comprise from 40 to 80% by weight of one or more alkenes and from 5 to 60% by weight of one or more C₁-C₈ alkyl (meth)acrylates and from 3 to 30% by weight of carbon monoxide wherein the one or more alkenes are defined as in (iii.c) and wherein the C₁-C₈ alkyl (meth)acrylates are selected from the group as defined in the alkyl(meth)acrylate (co)polymers (iii.a).

Preferably the alkene/alkyl(meth)acrylate/carbon monoxide copolymer is an ethylene/ethyl acrylate/carbon monoxide, an ethylene/n-butyl acrylate/carbon monoxide or an ethylene/2-ethylhexyl acrylate/ carbon monoxide copolymer.

Vinyl alkanoate comprising polymers (iv) for being used in the polymer blend of the backing layer of the present invention comprise one or more (co)polymers selected from the group consisting of vinyl alkanoate homo- and copolymers (iv.a); alkene/vinyl alkanoate copolymers (iv.b); alkene/vinyl alkanoate/carbon monoxide copolymers (iv.c); and mixtures thereof.

The vinyl alkanoate homo- and copolymers (iv.a) are polymers comprising one or more vinyl alkanoate monomer(s), defined by the general formula RCOOCH=CH2, wherein R is an alkyl radical containing from 1 to 20 carbon atoms, and are preferably selected from the group consisting of vinyl formate, vinyl acetate, vinyl propionate, vinyl butyrate, vinyl octanoate and vinyl stearate.

Preferably the vinyl alkanoate copolymers comprise at least 60% by weight, more preferably at least 70% by weight, most preferably at least 80% by weight or even at least 90% by weight of vinyl acetate. Preferably the vinyl alkanoate polymer is polyvinyl acetate.

The alkene/vinyl alkanoate copolymers (iv.b) comprise one or more alkenes and one or more vinyl alkanoate(s) wherein the one or more alkenes are defined as in (iii.c) and wherein the one or more vinyl alkanoate monomer(s) are defined as in (iv.a).

Preferably the alkene/vinyl alkanoate copolymer comprises at least 60% by weight, more preferably at least 70% by weight, most preferably at least 80% by weight or even at least 85% by weight of one or more vinyl alkanoate(s) and 40% or less, preferably 30% or less, more preferably 20% or less, most preferably 15% or less of one or more 1-alkene(s).

Preferably the alkene/vinyl alkanoate copolymer is an ethylene/vinyl acetate copolymer comprising at least 60% by weight, preferably at least 70% by weight, more preferably at least 80% by weight, most preferably at least 85% by weight of vinyl acetate.

The alkene/vinyl alkanoate/carbon monoxide copolymers (iv.c) are copolymers comprising 40 to 80% by weight of one or more alkenes, 5 to 60% by weight of one or more vinyl alkanoates and 3 to 30% by weight of carbon monoxide, wherein the one or more alkenes are defined as in (iii.c) and wherein the one or more vinyl alkanoates are defined as in (iv.a).

Preferably the alkene/vinyl alkanoate/carbon monoxide copolymer is an ethylene/vinyl acetate/carbon monoxide copolymer.

The polymer blend of the backing layer of the decorative surface covering according to the present invention comprises:
- from 30 to 90% by weight, preferably from 35 to 80% by weight, more preferably from 40 to 75% by weight of polylactic acid (ii) or of a mixture of polylactic acid and one or more (meth)acrylate comprising polymer(s) (iii), wherein said mixture comprises at least 5% by weight, preferably at least 10% by weight, more preferably at least 15% by weight, most preferably at least 20% by weight of polylactic acid;
- from 10% to 70% by weight, preferably from 20 to 65%, more preferably 25 to 60% by weight of polyvinylbutyral(i) or of a mixture of polyvinyl butyral and/or one or more vinyl alkanoate comprising polymer(s) (iv), wherein said mixture comprises at least 5% by weight, preferably at least 10% by weight, more preferably at least 15% by weight, most preferably at least 20% by weight of polyvinyl butyral.

The composition of the backing layer according to the present invention further comprises ingredients such as plasticizers, preferably bioplasticizers, fillers, antioxidants, and lubricants.

Additives, such as, modifying resins, foaming agents, tackifiers, dispersion agents, antistatic agents, thermal and light stabilizers, flame retardants, or any combination thereof are optionally comprised.

Any plasticizer capable of plasticizing the composition comprising PVB, PLA and/or one or more acrylate polymer(s) can be used. Suitable plasticizers are selected from the group consisting of dialkyl esters of cyclohexane dicarboxylic acids; dialkyl esters of aliphatic dicarboxylic acids; alkyl esters of aromatic mono- di-, tri-, or tetra-carboxylic acids; lower alkyl citrates; lower alkyl phosphates, alkyl sulfonates and other plasticizers used in conventional polyvinyl chloride applications.

Preferably the plasticizers comprise alkyl esters of polycarboxylic acids, more preferably alkyl esters of aromatic polycarboxylic acids.

Preferably the plasticizers comprise an epoxidized or otherwise derivatized vegetable oils, for example epoxidized soybean oils such as epoxidized C₁-C₁₀ alkyl soyate, epoxidized linseed oil, epoxidized soy oil, epoxidized tall oil and the like.

Preferably the plasticizer is an ecologically friendly citrate-based plasticizer that includes a blend of citrate and derivatized vegetable oil.

Preferably the plasticizer is an acetylated monoglyceride such as for example the acetylated monoglyceride of ricinoleic acid.

The plasticizer is typically present in an amount of up to 100 parts by weight, preferably from 2 to 100 parts by weight, more preferably from 3 to 70 parts by weight, most preferably from 4 to 55 parts by weight or even from 5 to 40 parts by weight, for 100 parts by weight of polymer blend.

The compositions of the backing layer of the present invention further comprise one or more fillers in an amount comprised between 25 and 500 parts by weight, preferably between 50 and 350 parts by weight, more preferably between 65 and 250 parts by weight and most preferably between 75 and 200 parts by weight for 100 parts by weight of polymer blend.

Examples of fillers suitable for the composition of the present invention can be any conventional filler, especially those types traditionally used in surface coverings.

The filler can be organic, inorganic, or a combination of both, such as with different morphologies. Examples include, but are not limited to, coal fly ash, carbonate salts such as magnesium carbonate, calcium carbonate and calcium-magnesium carbonate, barium sulfate, carbon black, metal oxides, inorganic material, natural material, alumina trihydrate, magnesium hydroxide, bauxite, talc, mica, dolomite, barite, kaolin, silica, post-consumer glass, or post-industrial glass, synthetic and natural fiber, or any combination thereof.

Preferably the filler comprises talc, mica, calcium carbonate, magnesium carbonate, dolomite, barite, bauxite, magnesium hydroxide, kaolin, silica, glass, or any combination thereof.

The composition of the backing layer of the present invention further comprises one or more antioxidants in an amount comprised between 0.01 to 3 parts by weight, preferably from 0.1 to 2 parts by weight, for 100 parts by weight of the polymer blend.

The antioxidant for being used in the backing layer of the decorative surface coverings of the present invention comprises one or more sterically hindered phenols or a mixture of one or more sterically hindered phenols and one or more phosphites.

The sterically hindered phenols preferably used are octadecyl-3-(3,5-di-t-butyl-4-hydroxyphenyl)propionate (Irganox^{®} 1076); pentaerythritoltetrakis[3-(3,5-di-t-butyl-4-hydroxyphenyl)propionate] (Irganox^{®} 1010) both supplied from BASF; and 4,4'-methylene-bis(2,6-di-t-butylphenol).

The phosphites preferably used are trisnonylphenyl phosphite (Weston^{®} TNPP) supplied from Addivant^{™}; tris (2,4-di-t-butylphenyl)phosphite (Irgafos^{®} 168) supplied from BASF, Ltd.; and bis(2,4-di-t-butylphenylpentaerythritol) diphosphate (Everfos^{®}-626) supplied from Everspring Chemical Co., Ltd.

Other stabilizers such as lead salts, organotin compounds, barium, cadmium and zinc salts, calcium/zinc stabilisers, for reducing degradation by heat, are optionally added in an amount of up to 3 parts by weight for 100 parts by weight of polymer blend.

The composition of the backing layer of the present invention further comprises one or more lubricants of the stearic acid type, the fatty acid ester type, the fatty acid amide type, the paraffin hydrocarbon type, the naphtenic hydrocarbon type, the metal soap type, the silicone type, polyethylene glycol type and waxes, used alone or as a mixture.

Preferred lubricants comprise a mixture of stearic acid type and silicone type lubricants.

Preferred stearic acid type lubricants include stearic acid and zinc stearate.

Besides the backing layer, the decorative multi-layer surface coverings of the present invention comprise a core layer, a printed layer and a wear layer, each having a top surface and a bottom surface, wherein the top surface of the backing layer is affixed to the bottom surface of the core layer, wherein the top surface of the core layer is affixed to the bottom surface of the printed layer; wherein the top surface of the printed layer is affixed to the bottom layer of the wear layer and wherein the top surface of the wear layer is coated with a protecting top-coating.

Preferably at least one of the core layer, the printed layer and the wear layer comprises PVB and/or PLA and/or one or more (meth)acrylate comprising polymer(s) and/or one or more vinyl alkanoate comprising polymer(s).

The core layer, the printed layer and the wear layer further may comprise one or more polymers selected from the group consisting of polar group comprising polyolefins, thermoplastic polyurethanes and thermoplastic elastomers comprising sequences of one or more vinyl aromatic monomer(s) and sequences of one or more alkylene(s).

Preferably at least one of the core layer, the printed layer and the wear layer is PVC free.

The wear layer may comprise a protecting top-coat on its top surface.

The protecting top-coat formulations preferably are selected from the standard polyurethane formulations conventionally used for coating polyvinyl chloride surface coverings.

Examples of said standard formulations are two-component solvent borne, waterborne or solvent-free polyurethane formulations, solvent borne air drying or moisture curable one component formulations and aqueous polyurethane dispersions, wherein drying and/or cross-linking is performed at room temperature or higher eventually in combination with forced air conditions..

The top-coat, on the top-surface of the wear layer, preferably is a polyurethane comprising top-coat obtained from cross-linking, under the influence of actinic irradiation, a radiation curable composition comprising ethylenically unsaturated polyurethane polymers and/or one or more ethylenically unsaturated oligomers and/or monomers, said oligomers and monomers comprising ester, ether and/or urethane group(s).

The radiation curable composition preferably comprises a radiation curable aqueous polyurethane dispersion.

The printed layer may comprise one or more prints on at least one of its surfaces.

The core layer may comprise a carrier such as a woven or non-woven mesh or fabric, or tissue of more or less thermally stable materials such as glass fiber mat.

The decorative surface coverings of the present invention preferably are made from the same die design; the tiles generally are uniform in appearance. The ends of the tiles can have formed therein grooves, on preferably two or more sides, for receiving a pline or other connecting member so that the end of the adjacent tiles can be joined together as the side edges of the tiles are joined. On the other hand the tiles may be provided with a groove and/or a tongue on preferably two or more sides, wherein the tongue may be provided on one side while the groove is on the opposite side.

The ends of the tiles as well as the tongue and/or groove can have a bonding agent applied to these locations in order to seal or bond the tiles together. Said bonding agent may be an adhesive or a constituent capable of solvating or dissolving the particular polymer blend of the tiles and the plines, when plines are the connecting member.

The bottom surface of the backing layer further may comprise an adhesive, intended for sticking the decorative surface coverings to a base substrate such as a floor, wall or ceiling.

For the particular case where flooring tiles only are attached to each other through the groove system, without providing an adhesive on the bottom surface of the backing layer, a floating floor is obtained.

The adhesive may be applied on the bottom surface of the backing layer during its production process. As an alternative, the adhesive is applied either on the bottom surface of the backing layer or on the base substrate (floor, wall, ceiling) at the time that the decorative surface covering is laid.

The adhesive is preferably an aqueous adhesive or a solvent-free adhesive.

The aqueous adhesive in general is an aqueous dispersion, substantially free of organic solvents, comprising from 20 to 99% by weight of one or more polymer(s), said polymers preferably being obtained from the free radical polymerization of one or more ethylenically unsaturated monomer(s) selected from the group consisting of C₁-C₂₀-alkyl (meth)acrylates, vinyl and allyl esters of carboxylic acids of up to 20 carbon atoms, vinyl ethers of C₁-C₈ alcohols, vinyl aromatics of up to 20 carbon atoms, ethylenically unsaturated nitriles, vinyl halides, C₁-C₁₀-hydroxyalkyl(meth)acrylates, (meth)acrylamide, (meth)acrylamide substituted on the nitrogen by C₁-C₄-alkyl, ethylenically unsaturated carboxylic acids, ethylenically unsaturated dicarboxylic acids, half-esters of ethylenically unsaturated dicarboxylic acids, anhydrides of ethylenically unsaturated dicarboxylic acids, non-aromatic hydrocarbons having at least two conjugated double bonds, C₁-C₈ alkenes and mixtures of these monomers.

The one or more polymers preferably comprise from 60 to 100% by weight of one or more monomers selected from the group consisting of C₁-C₂₀-alkyl (meth)acrylates and vinyl and allyl esters of carboxylic acids of up to 20 carbon atoms. The one or more polymers further comprise from 0 to 40% by weight of one or more monomers selected from the group consisting of vinyl ethers of C₁-C₈ alcohols, vinyl aromatics of up to 20 carbon atoms, ethylenically unsaturated nitriles, vinyl halides C₁-C₁₀-hydroxyalkyl(meth)acrylates, (meth)acrylamide, (meth)acrylamide substituted on the nitrogen thereof by C₁-C₄-alkyl, ethylenically unsaturated carboxylic acids, ethylenically unsaturated dicarboxylic acids, half-esters of ethylenically unsaturated dicarboxylic acids, , anhydrides of ethylenically unsaturated dicarboxylic acids, non-aromatic hydrocarbons having at least two conjugated double bonds, C₁-C₈ alkenes and mixtures of these monomers.

Examples of alkyl (meth)acrylates having a C₁-C₂₀-alkyl radical are methyl methacrylate, methyl acrylate, n-butyl acrylate, ethyl acrylate and 2-ethylhexyl acrylate.

Mixtures of alkyl (meth)acrylates are particularly suitable.

Vinyl esters of carboxylic acids of 1 to 20 carbon atoms are, for example, vinyl laurate, vinyl stearate, vinyl propionate, vinyl versatate and vinyl acetate; examples of allyl esters are allyl propionate and allyl acetate.

Examples of vinyl ethers of C₁-C₈ alcohols are vinyl methyl ether, vinyl ethyl ether, vinyl isopropyl ether and vinyl butyl ether.

Examples of vinylaromatic compounds are vinyltoluene, α-methylstyrene, p-methylstyrene, α-butylstyrene, 4-n-butylstyrene, 4-n-decylstyrene and preferably styrene.

Examples of nitriles are acrylonitrile and methacrylonitrile.

The vinyl halides are ethylenically unsaturated compounds substituted by chlorine, fluorine or bromine, preferably vinyl chloride and vinylidene chloride.

Examples of C₁-C₁₀-hydroxyalkyl(meth)acrylates are hydroxyethyl (met)acrylate, 2-hydroxy-propyl (meth)acrylate, and 2-hydroxy-butyl (meth)acrylate.

Examples of (meth)acrylamide substituted on the nitrogen by C₁-C₄ -alkyl are N(,N-di)-methyl (meth)acrylamide, N(,N-di)-ethyl (meth)acrylamide, N(,N-di)-propyl (meth)acrylamide, N(,N-di)-isopropyl (meth)acrylamide and (,N-di)-butyl (meth)acrylamide.

Examples of nonaromatic hydrocarbons having 2 to 8 carbon atoms and at least two olefinic double bonds are butadiene, isoprene and chloroprene.

Examples of ethylenically unsaturated (di)carboxylic acids are (meth)acrylic acid, maleic acid, fumaric acid and itaconic acid.

An example of an ethylenically unsaturated anhydride is maleic anhydride.

Examples of C₁-C₇ alkenes are ethene, propene, 1-butene, 1-pentene, 1-hexene and 2-methyl-1-butene.

(Co)polymers of (meth)acrylate monomers and vinyl esters of carboxylic acids are particularly preferred.

The number average molecular weight (Mn) of the polymer is preferably greater than 20,000; the glass transition temperature of the polymer (midpoint temperature) in general is below 0°C.

The copolymer in general is prepared by solution polymerization with subsequent dispersing in water or by emulsion polymerization, so that aqueous (co)polymer dispersions are formed.

The solid content of the (co)polymer dispersions is preferably from 40 to 80% by weight, preferably from 45 to 75 % by weight.

In addition to the polymers, the aqueous composition further may comprise one or more fillers and one or more tackifiers. Examples of fillers are finely milled or precipitated chalks, dolomite, quartz powder and silica flour. Examples of tackifiers are wood rosin and esterified rosin.

Suitable esterified rosins include pentaerythritol-wood rosin esters and the esters of pentaerythritol or glycerine with hydrogenated rosin or highly stabilized rosin.

The composition may furthermore contain wetting agents or dispersants, for example for the fillers thickeners and further conventional additives, such as antifoams and preservatives.

The water content of the final dispersion is in general comprised between 7 and 50% by weight, in particular between 10 and 30 % by weight, based on the total aqueous composition.

The aqueous adhesive can be applied to the substrate or to the bottom surface of the backing layer, for example, by means of a toothed strip. After drying in the air in the usual manner, the decorative surface covering is laid.

As an alternative the aqueous adhesive is applied on the bottom surface of the backing layer during its production process. After evaporation of water a silicone release sheet may be provided.

A solvent-free adhesive in general is obtained from the conversion of a reactive fluid adhesive precursor, for example through thermal activation and/or actinic radiation.

Preferably the solvent-free adhesive precursor is applied on the bottom surface of the backing layer during the production process resulting in a decorative surface covering with a self-adhesive bottom surface. Silicone sheets may be used as release sheet.

The solvent-free adhesive for being used on the bottom-surface of the backing layer of the present invention is substantially solvent-free.

Substantially solvent-free means that the solvent content in the adhesive is less than 2% by weight, preferably less than 1% by weight.

The adhesive precursor preferably is a copolymer and/or oligomer comprising (meth)acrylate and/or vinyl esters monomers and further comprising ethylenically unsaturated groups, such as for example a (meth)acrylic group, said groups being intended for further reaction after application.

The weight average molecular weight of the (meth)acrylic copolymer, having functional groups reactable when subjected to heat and/or actinic irradiation, is generally about 30,000 g/mole or more,

The adhesive precursor further may comprise up to 25% by weight of one or more ethylenically unsaturated monomers such as for example tripropylene glycol di(meth)acrylate, ethoxylated trimethylolpropane tri(meth)acrylate and ditrimethylolpropane tetra (meth)acrylate.

Once applied on the bottom-surface of the backing layer, the adhesive precursor is converted into adhesive through reaction of the ethylenically unsaturated groups under the influence of heat, when a thermal initiator is admixed to the adhesive precursor formulation, or under the influence of irradiation, when a photoinitiator is admixed to the adhesive precursor formulation.

Examples of thermal initiator are diazo compounds such as 2,2'-azobis(isobutyronitrile or peroxides such as benzoyl peroxide or t-butylperoxy-2-ethylhexanoate.

Examples of photoinitiator are Irgacure 184 (1-hydroxy-cyclohexyl-phenyl-ketone), Irgacure 819 (bis(2,4,6-trimethylbenzoyl)-phenylphosphineoxide) and Irgacure 1850 (a 50/50 mixture of bis(2,6-dimethoxybenzoyl)-2,4,4-trimethylpentyl-phosphine oxide and 1-hydroxy-cyclohexyl-phenyl-ketone).

With actinic radiation the present invention means exposure to actinic radiation such as ultraviolet (UV) radiation with a wavelength of for instance 250-600 nm.

Examples of radiation sources are medium and high-pressure mercury vapour lamps, lasers, pulsed lamps (flashlight), halogen lamps and excimer emitters.

With thermally activated, the present invention means crosslinking at room temperature or higher.

Alternatively the adhesive precursor may comprise a carboxyl- and/or hydroxyl- and/or acetoacetyl -functional meth)acrylic (co)polymer in a mixture with a crosslinking agent having functional groups reactable with the functional groups of the adhesive precursor once thermally activated.

Examples of crosslinking agents are polyisocyanate, carbodiimide, or lower-alkoxylated amino formaldehyde crosslinking agents.

It has been observed that a backing layer with the composition of the present invention proves an outstanding compatibility with the above acrylic based adhesives.

The present invention provides a decorative surface comprising:
- a backing layer that may be provided with an adhesive at its bottom surface,
- a core layer optionally comprising a glass fiber mat,
- a printed layer optionally provided with one or more prints on its top-surface and/or its bottom surface,
- a wear layer preferably provided with a protective top-coat at its top-surface.

The decorative surface covering further may be provided with at least one groove on at least one side, preferably on at least two sides located opposite to each other.

The present invention provides a method for the preparation of said decorative surface coverings.

In general the calendering process is used wherein a molten polymer blend is fed to a series of two or more heated rolls in such a way to produce a polymer layer of uniform thickness.

The hot polymer blend for the preparation of the backing layer is obtained from compounding PVB, preferably recycled PVB, (i) or a mixture of PVB and one or more vinyl alkanoate comprising polymer(s) (iv) and PLA(ii) or a mixture of PLA and one or more (meth)acrylate comprising polymer(s) (iii) along with the filler(s), the plasticizer(s), preferably bioplasticizers, and optionally one or more additives such as stabilizers and lubricants in a suitable heated mixer, for example in a twin screw or a single screw extruder, a mixing bowl with heated jacket, a Banbury mixer, continuous mixer, a ribbon mixer or any combination thereof at an internal temperature comprised between 140 and 240°C, preferable between 160 and 220°C, more preferable between 170 and 210°C to form a blend.

By internal temperature it is meant the real temperature of the PVC-free paste and not the set temperatures of the equipment for preparing and processing of said PVC-free paste.

The uniform hot mass then is discharged onto one or more processing machines, comprising a series of two or more heated rolls in order to produce a polymer layer of uniform thickness comprised from 50 to 1000 µm, preferably from 100 to 800 µm.

The set temperature of the calendering rolls is comprised between 100 and 200°C, preferably between 120 and 190°C, more preferably between 130 and 180°C.

The core layer, printed layer and wear layer are prepared from melt mixing and melt calendering the corresponding polymer blend, plasticizer(s) and optional pigments, fillers and additives.

Calendering is performed at:
- a temperature comprised between 100 and 200°C, preferably between 120 and 190°C, more preferably between 130 and 180°C;
- a speed comprised between 2 and 100 m/min, preferably between 10 and 50 m/min, more preferably between 10 and 20 m/min.

A protecting top coating is preferably applied on the top surface of the wear layer. The protective top-coating preferably is cross-linked, more preferably is cross-linked by actinic irradiation.

A radiation curable composition, preferably a radiation curable aqueous polyurethane dispersion is homogeneously applied on the top surface of the decorative substrate standing at a temperature comprised between 25 and 60°C, preferably between 30°C and 50°C.

The protecting top coating may be applied by any suitable coating process known to those of ordinary skill in the art, for example by direct gravure coating, reverse gravure coating, offset gravure coating, smooth roll coating, curtain coating, spray coating and combinations thereof. Direct gravure coating and smooth roll coating are preferred.

For the particular case of an aqueous polyurethane dispersion, water is evaporated, preferably in a convection oven at about 100°C, whereupon the decorative substrate comprising the polyurethane top-layer optionally is heated to a temperature comprised between 100 and 200°C, and subsequently is mechanically embossed before cross-linking.

For the particular case where the curable composition is not water based, such as for example a 100% solids composition or a near 100% solids composition said composition preferable is applied to the decorative substrate and cross-linked after the embossing step.

Mechanical embossing is performed by pressing a texture into the decorative surface covering comprising the polyurethane layer atop. Embossing is carried out at a pressure comprised between 10 and 25 kg.cm⁻² and surface temperature comprised between 100°C and 200°C, preferably between 130°C and 200°C.

The apparatus for mechanically embossing a substrate in general includes a cooled embossing roller and a backup roller operatively positioned within the embossing roller such that a nip is formed between the backup roller and the embossing roller whereby the substrate may pass through the nip and engage the embossing roller for imparting a mechanically embossed pattern. The apparatus further includes a profilometer capable of quantifying the mechanically embossed pattern as the substrate is being embossed.

In general the texture obtained from mechanical embossing is characterized by a depth comprised between about 10 to 100 µm, a width comprised between about 125 to 400 µm, a wall angle (angle relative to surface) comprised between about 5 to 40 degrees and a frequency of about 4 to 20 features per cm.

The bottom-surface of the backing layer of the decorative layer stack may be provided with an organic solvent-free adhesive.

The adhesive preferably is applied through spraying methods, metering and coating methods.

Drying the aqueous adhesive composition or the thermally activated conversion of the adhesive precursor may be performed under influence of convection and/or infrared energy.

Radiation induced conversion of the adhesive precursor is performed by exposure to actinic radiation such as ultraviolet (UV) radiation with a wavelength of for instance 250-600 nm or from the bombardment with high-energy electron beams (EB) at for instance 150-300 keV.

It has been observed that the bonding strength between the core- and the backing layer is comparable to the bonding strength between two or more layers of the current polyvinyl chloride surface coverings.

Bonding between the layers of the present invention, is characterized by a peel strength, according to ISO 24345:12 (Resilient floor coverings - determination of peel resistance) in excess of 50N/5cm.

It further has been observed that the bonding strength between the backing layer, comprising the adhesive, and a primed filled concrete floor plate is in excess of 40 N/50 mm or even 50 N/50 mm and that upon detaching the floor covering from said floor plate, there is residue-free detachment.

### Examples

The following illustrative examples are merely meant to exemplify the present invention and are not destined to limit or otherwise define the scope of the present invention.

Table 1 illustrates the composition, the process ability and the adhesion performances of backing layers according to the invention (Examples 1 to 12) along with comparative examples 1 to 4.

**Table 1.**

| | **Examples** | | | | | | | | | | | | **Comp. Examples** | | | |
|---|---|---|---|---|---|---|---|---|---|---|---|---|---|---|---|---|
| **Constituent** | **1** | **2** | **3** | **4** | **5** | **6** | **7** | **8** | **9** | **10** | **11** | **12** | **1** | **2** | **3** | **4** |
| Polylactic acid | 40 | 40 | 40 | 25 | 5 | 20 | 30 | 30 | 35 | 35 | 30 | 20 | 10 | | 25 | |
| Polyvinyl butyral | 10 | 10 | 10 | 5 | 30 | 30 | 10 | 30 | 15 | 15 | 20 | 40 | | 30 | | 30 |
| (Meth)acrylate | 50 | 50 | 50 | 45 | 25 | 20 | 30 | 20 | 50 | 50 | 50 | 10 | 70 | 70 | 75 | |
| Vinyl alkanoate | | | | 25 | 40 | 30 | 30 | 20 | | | | | 20 | | | 70 |
| Plasticizer | 10 | 25 | 55 | 5 | 20 | 10 | 15 | 25 | 25 | 25 | 25 | 40 | 20 | 20 | 20 | 20 |
| Filler | 25 | 100 | 200 | 100 | 100 | 100 | 150 | 250 | 100 | 150 | 150 | 150 | 100 | 100 | 100 | 100 |
| Lubricant | .5 | 0 | 2 | 1 | 1 | 1 | 1 | 1 | 1 | 1 | 1 | 1 | 1 | 1 | 1 | 1 |

| Processing - Melt Strength | | | | | | | | | | | | | | | | |
|---|---|---|---|---|---|---|---|---|---|---|---|---|---|---|---|---|
| Excellent | X | X | X | | X | | | | X | X | X | | | | | |
| Good | | | | X | | | | X | | | | | | | | |
| Medium | | | | | | X | X | | | | | X | | | | X |
| Bad | | | | | | | | | | | | | X | X | X | |

| Adhesion with Core Layer (peel strength, according to ISO 24345:12) | | | | | | | | | | | | | | | | |
|---|---|---|---|---|---|---|---|---|---|---|---|---|---|---|---|---|
| > 60 N/50 mm | | | | X | X | X | X | X | | | X | | | | | |
| 50-60N/50mm | | | | | | | | | X | X | | | | | | |
| 40-50N/50mm | X | X | X | | | | | | | | | X | | X | X | |
| < 40 N/50 mm | | | | | | | | | | | | | X | | | X |

In table 1 the sum of the thermoplastic polymers of the polymer blend equals 100 parts.

Polyvinyl butyral used in the examples 3, 4, 5 and 7 is recycled polyvinyl butyral comprising approximately 27% of plasticizer. For the examples comprising recycled polyvinyl butyral, the parts, as given in the table, represent the parts of polyvinyl butyral, present in the recycled polyvinyl butyral.

The amounts of plasticizer, filler and lubricant are expressed in parts for 100 parts of polymer blend.

All examples and comparative examples comprise 0.3 parts of antioxidant for 100 parts of polymer blend. The antioxidant is Irganox 1010, Irganox 1076 or a 1/1 mixture of both.

The filler is chalk VS35 (CaCO₃) from Omya; the antioxidant is Irganox 1010, Irganox 1076 or a 1/1 mixture of both from BASF; the lubricant is Radiacid® 444 from Olean (stearic type).

Polylactic acid is IngeoTM from NatureWorks (4043D or 4060D).

The (meth)acrylate comprising polymer is:
- Kane ACE®PA-210 or Kane ACE®PA-211 from Kaneka, a (meth)acrylate homo- or a random (co)polymer for examples 1,4,9 and comparative example 3 ;
- PA 910 from LG Chemicals (polymethyl methacrylate) for examples 3, 5 and 8;
- Vamac® D from Dupont (alkene/ (meth)acrylate copolymer) for examples 2, 6 and 10;
- Elvaloy® 441 HP from Dupont (alkene/ (meth)acrylate/carbon monoxide copolymer) examples 7, 11 and 12.

The vinylalkanoate comprising polymer is:
- Vinnex® 2510 from Wacker (vinyl alkanoate polymer comprising at least 60% by weight of vinyl acetate) for examples 4, 5, 11,21 and 22.
- Levapren® 900 from Lanxess (alkene/vinyl alkanoate copolymer) for examples 2, 10, 17 and 20.
- Elvaloy® 742 from Dupont (alkene/vinyl alkanoate/carbon monoxide copolymer) for examples 1, 8, 9, 13, 14 and 15.

The plasticizers introduced in the polymer blends are Grinsted® Soft-N-Safe from Danisco (acetylated monoglycerides) for examples 2, 6 and comparative example 1; Citrofol® AII from Jungbunzlauer (C1-C8 alkyl acetylcitrate) for example 1; a 1/1 mixture of Citrofol® BII from Jungbunzlauer (C1-C8 alkyl acetylcitrate) and EastmanTM TOTM plasticizer from Eastman (trialkyl ester of aromatic tricarboxylic acid) for examples 7, 10, and comparative example 4; a 1/1 mixture of Citrofol® AII and EastmanTM TOTM plasticizer for examples 3, 12 and comparative example 2; a 3/1 mixture of Grinsted® Soft-N-Safe and Disflamoll® DPO from Lanxess (lower alkyl-aryl phosphates) for example 5; a 1/1 mixture of Plastimoll® DOA from BASF dialkyl ester of aromatic dicarboxylic acid) and Drapex® 3.2 from Galata Chemical (epoxidized vegetable oil) for examples 4, 8 and comparative example 3; and a 1/1 mixture of Plastimoll® DOA and Drapex® 6.8 from Galata Chemical (epoxidized vegetable oil) for examples 9 and 11.

The polymer blends of examples 3, 4, 5 and 7 of further comprise additional plasticizer, in general triethylene glycol di-2-ethylhexanoate, through the use of recycled polyvinyl buryral.

The amounts of additional plasticizer for 100 parts of polymer blend is 3 parts for examples 3 and 7, 1.5 parts for example 4 and 10 parts for example 5.

A backing layer of 0.5 mm thickness was prepared through melt-mixing in an extruder at a temperature of 170°C and calendering in a roller mill at a temperature of 170°C.

A core layer (of 1.25 mm) comprising a polymer blend comprising 2.5% by weight of polylactic acid, 75% by weight of polyvinyl butyral and 22.5% by weight of (meth)acrylate comprising polymer was bonded to the top surface of the backing layer in a hot/cold-pressing step at 160°C at approximately 4 bar pressure, followed by cooling down to 25 °C.

As appears from the above examples, the compositions according to the present invention (examples 1 to 12) enable processing using conventional process conditions on existing equipment, and are characterized by an adhesion to the core layer, as represented by the peel strength of at least 40 N/50 mm in general of at least 50 N/50 mm.

The compositions of the comparative examples are characterized by a too high melt strength inhibiting calendering ability. Moreover comparative examples 1 and 4 are characterized by a too low peel strength (less than 40 N/50 mm).

## Claims

1. Decorative multi-layer surface covering comprising a backing layer, said backing layer comprising a polymer blend, said polymer blend comprising:
- from 30 to 90% by weight, preferably from 35 to 80% by weight, more preferably from 40 to 75% by weight of polylactic acid(ii) or of a mixture of polylactic acid and one or more (meth) acrylate comprising polymers (iii), wherein said mixture comprises at least 5% by weight of polylactic acid.
- from 10% to 70% by weight, preferably from 20 to 65%, more preferably 25 to 60% by weight of polyvinyl butyral(i) or of a mixture of polyvinyl butyral and one or more vinyl alkanoate comprising polymer(s) (iv), wherein said mixture comprises at least 5% by weight of polyvinyl butyral,
the total amount of polymer in the polymer blend representing 100% by weight.

2. The decorative multi-layer surface covering according to claim 1, wherein polyvinyl butyral is recycled polyvinyl butyral.

3. The decorative multi-layer surface covering according to claim 1 or 2, wherein polyvinyl butyral is recycled polyvinyl butyral comprising from about 5 to about 50% by weight, of one or more plasticizers selected from the group consisting of alkyl esters of polyethylene glycol, dialkyl esters of aliphatic dicarboxylic acid, alkyl-aryl of aliphatic dicarboxylic acids, alkyl esters of aromatic mono-, di-, tri-, or tetra-carboxylic acids, alkyl-aryl esters of aromatic di-, tri-, or tetra-carboxylic acids, phosphate esters and ricinoleates.

4. The decorative multi-layer surface covering according to any of claims 1 to 3, wherein the one or more (meth)acrylate comprising polymers (iii) are selected from the group of:
- (iii.a) the alkyl (meth)acrylate homo- or a random (co)polymer comprising at least 60% by weight, preferably at least 70% by weight, more preferably at least 80 parts by weight of methyl (meth)acrylate;
- (iii.b) the alkyl (meth)acrylate copolymer is a block copolymer comprising one or more blocks of methacrylic ester units and one or more blocks of acrylic ester units;
- (iii.c) the alkene/alkyl (meth)acrylate copolymer comprising from 50 to 95% by weight of one or more alkenes and from 5 to 50% by weight of one or more C₁-C₈ alkyl (meth)acrylates;
- (iii.d) the alkene/ alkyl (meth)acrylate/carbon monoxide copolymer comprising from 40 to 80% by weight of one or more alkenes, from 5 to 60% by weight of one or more alkyl (meth)acrylates and from 3 to 30% by weight of carbon monoxide; and
- mixtures of (iii.a), (iii.b), (iii.c) and (iii.d).

5. The decorative surface covering according to any of claims 1 to 4, wherein the one or more vinyl alkanoate comprising polymer(s) (iv) are selected from the group consisting of:
- (iv.a) the vinyl alkanoate polymer comprising at least 60% by weight, more preferably at least 70% by weight, most preferably at least 80% by weight or even at least 90% by weight of vinyl acetate.
- (iv.b) the alkene/vinyl alkanoate copolymer comprising 60% by weight or more, preferably 70% or more, more preferably 80% or more, most preferably 85% or more of vinyl alkanoate;
- (iv.c) the alkene/vinyl alkanoate/carbon monoxide copolymer comprising 40 to 80% by weight of one or more alkenes, 5 to 60% by weight of one or more vinyl alkanoates and 3 to 30% by weight of carbon monoxide; and
- mixtures of (iv.a), (iv.b) and (iv.c).

6. The decorative surface coverings according to any of claims 1 to 5 comprising from 2 to 100 parts by weight, preferably from 3 to 70 parts by weight, more preferably from 4 to 55 parts by weight and most preferably from 5 to 40 part by weight of one or more plasticizers selected from the group consisting of dialkyl esters of cyclohexane dicarboxylic acids; dialkyl esters of aliphatic dicarboxylic acids; alkyl esters of aromatic mono- di-, tri-, or tetra-carboxylic acids; lower alkyl phosphates; lower alkyl-aryl phosphates; alkyl sulfonates and bioplasticizers for 100 parts by weight of the polymer blend.

7. The decorative surface coverings according to any of claims 1 to 6, wherein the backing layer comprises one or more bioplasticizers selected from the group consisting of acetylated monoglycerides, C₁-C₈ alkyl citrate, C₁-C₈ alkyl acetylcitrate and epoxidized vegetable oils.

8. The decorative multi-layer surface coverings according to any of claims 1 to 7 wherein the backing layer is PVC-free.

9. The decorative surface coverings according to any of claims 1 to 8, comprising
- the backing layer in contact with the bottom surface of the core layer,
- a printed layer in contact with the top surface of the core layer,
- a wear layer in contact with the top surface of the printed layer,
wherein at least one of said core-, printed- and wear layer comprises polylactic acid and/or polyvinyl butyral and/or (meth)acrylate comprising polymer(s) and/or vinyl alkanoate comprising polymer(s).

10. The decorative multi-layer surface coverings according to any of claims 1 to 9 wherein at least one of the core layer, the printed layer and the wear layer is PVC-free.

11. The decorative multi-layer surface coverings according to any of claims 1 to 10, comprising an adhesive on the bottom-surface of the backing layer.

12. The decorative multi-layer surface coverings according to any of claims 1 to 11 comprising at least one groove on at least one side, preferably on at least two sides located opposite to each other.

13. Method for the preparation of decorative multi-layer surface coverings according to claims 1 to 12 comprising the steps of:
a) melt-mixing the backing layer constituents at a temperature comprised between 140 and 240°C to form a backing-paste;
b) converting the backing-paste of step a) into the backing-layer using a calendering process at a temperature comprised between 100 and 200°C;
c) contacting and affixing the top-surface of the backing layer of step b) with one or more pastes, wherein at least one of said pastes comprises polylactic acid and/or polyvinyl butyral, said contacting and affixing being performed through a calendering process, at a temperature comprised between 130 and 220°C, to form a decorative multi-layer stack.

14. The method according to claim 13 wherein the polyvinyl butyral is at least partly obtained from a recycling process.

15. The method according to claim 13 or 14 comprising the additional step of providing tiles and providing at least one groove on at least one side, preferably on at least two sides being located opposite to each other, of said tiles.

16. The method according to any of claims claim 13 to 15 comprising the additional step of applying an adhesive composition on the bottom-surface of the backing layer and converting the adhesive composition to form the adhesive layer.

17. The method according to any of claims 13 to 16 wherein the adhesive composition is selected from the group consisting of aqueous adhesives and organic solvent-free adhesives.

18. The method according to any of claims 13 to 17 wherein the adhesive layer is obtained from:
- evaporating water from the aqueous adhesive composition; or
- thermal activated conversion of an adhesive precursor; or
- radiation induced conversion of an adhesive precursor.
